# EUROPEAN PATENT APPLICATION

(11) **EP 1 320 185 A2**
(43) Date of publication of application: **18.06.2003**
(21) Application number: 02258498.1
(22) Date of filing: 10.12.2002
(51) Int. Cl.: H02P 7/29

(54) **Motor control usable with high ripple BEMF feedback signal**

(30) Priority: 11.12.2001 US 12040
(71) Applicant: Fort James Corporation, Deerfield, IL 60015-0089 (US)
(72) Inventor: Morris, Andrew R., Green Cove Springs, Florida 32043-8079 (US)
(74) Representative: Pratt, David Martin

(57) **Abstract**

A motor control technique, which may be implemented in a motor drive unit of a sheet material dispenser, permits precise control of motor operation amounts within short intervals ("bursts") of motor operation. The technique marries "bang-bang" motor speed control with a variable power motor drive system, e.g., a pulse width modulation (PWM). Motor speed is sensed by turning the motor off and waiting for the resulting inductive kick to die out. Then, a voltage threshold detector detects whether the back electromotive force (BEMF) of the motor is above a threshold corresponding to a motor speed setting. A PWM drive is preferably set up to have a predetermined number of power levels, e.g., nine. The motor speed is repeatedly sampled and if the speed sensing voltage is above the threshold, the PWM is brought down to the next lower power level. If the speed sensing voltage is below the threshold, the PWM is brought up to the next higher power level. So configured, the system "bangs" up and down between adjacent power levels, instead of between zero and maximum power. Adjustments in the duration of a motor operation cycle are made in conjunction with the power level adjustments, to compensate for any power level adjustment that is not averaged out within the motor operation cycle. As a result, motor operation amounts may be closely controlled. Motor operation is far smoother and wasted power is reduced as compared to a conventional "bang-bang" system. Response times may be substantially improved relative to known feedback control systems, such as PID control, and the need for external speed monitoring transducers (i.e., "pick-off" devices) is eliminated.

## Description

### FIELD OF THE INVENTION

The present invention relates to motor control, particularly the control of motors used to achieve a result dependent on a motor operation amount, e.g., output shaft rotation as determined by motor speed and operation cycle time. More specifically, the invention relates to the control of motor driven feed-out or dispensing devices, including but not limited to motor driven sheet material dispensers. The invention has particularly advantageous application (but is not limited) to the control of relatively inexpensive low voltage motors operated intermittently for relatively short cycles or "bursts."

### BACKGROUND OF THE INVENTION

Closed loop (feedback) control of motors is commonly used in order to maintain a desired (target) operation speed of the motor, which may be fixed or variable. Known approaches include the use of speed detection transducers (i.e., "pick-off" devices) for continually monitoring the rotational speed of a motor output shaft, or a component driven by the output shaft, in conjunction with a pulse width modulation (PWM) motor drive, for varying the power delivered to the motor based upon a detected speed of the motor in relation to the target motor speed. Known feedback control schemes include proportional, integral and/or derivative control schemes. These vary the amount of power delivered to the motor based upon values calculated in relation to a deviation of the detected speed from the target speed (proportional), the rate at which the speed is approaching, or moving away from, the target speed (derivative) and the integral of the speed deviation-time curve (integral). Known proportional-integral-derivative (PID) control schemes employ each of these three techniques in conjunction with each- other, with the result that variability about a target speed may be held to a relatively low level. While generally effective in providing precise motor speed control, the approach is impractical for many applications, due primarily to the processing time and power required to perform the necessary computations. In addition, for some applications, device configuration and/or size may make it difficult to incorporate a so-called speed "pick-off" device, e.g., an optical interrupter or magnetic detector based tachometer. Also, for low cost applications, such devices may be prohibitively expensive.

In lieu of a separate speed monitoring transducer, in some applications it may be possible to use as a feedback control signal the back electromotive force (BEMF) of the motor to be controlled. BEMF is the characteristic of the motor to act like an electrical generator; the BEMF is produced on the motor power supply line and is proportional to motor speed. However, for many types of motors, especially small inexpensive motors used in high volume, light duty applications such as toys and small appliances, the BEMF has a large amount of motor position related fluctuation, called ripple, which does not provide a sufficiently accurate speed feedback signal to allow the use of conventional control techniques. Even with a control system having enough sensitivity to sense very small variations in motor speed, such small variations remain undetectable, as they are masked by the ripple.

In some applications, it may be possible to perform signal processing to cancel out the ripple, through averaging or other filter processes, in order to "find" the speed signal. However, this takes time and thus may not be feasible for applications where motor control must be carried out very rapidly in order to be effective. This includes motors which are operated intermittently for short periods of time, i.e., in a "burst" mode, and which require precise speed control within that short period of time. One such application is a motorized drive for a sheet material dispenser, for dispensing sheet material (e.g., paper towels, napkins, etc.) from a roll. In such dispensers, a dispensing cycle is carried out intermittently, to dispense towels on an as needed basis. A dispensing cycle may be triggered by a user's actuation of a switch, proximity detection of a user, or upon detecting the absence of sheet material in a discharge slot. In any event, the dispensing cycle will generally have a short duration, e.g., approximately one second. It is desirable to provide motor speed control within this period to assure that a proper and consistent amount of sheet material is dispensed. However, any such control has to be carried out very quickly if it is to be effective. Insufficient time is provided to perform the signal processing necessary to filter or otherwise condition a high ripple BEMF signal.

A very old motor control technique, often referred to as "bang-bang" control, utilizes On-Off switching. When the motor speed drops below a certain threshold speed, power is supplied to the motor. When the motor speed reaches or exceeds the set threshold motor speed, the power to the motor is cut. The basic On-Off control principle is the same principle behind the mechanical governor which was used to control the speed of DC motors before electronic controls became available. Basically, the mechanical governor is a rotating switch with a weight on it that moves outwardly under centrifugal force, causing the motor to switch off when it exceeds a certain speed. Once the motor slows down, the switch turns the motor back on. The motor speed therefore oscillates around the switching threshold. Motors controlled with "bang-bang" control experience rapid speed fluctuations, i.e., jitter, but maintain a very precise average speed. The jitter becomes especially bad at high input voltages and/or at low set speeds.

The term "bang-bang" control refers to the constant "banging" back and forth of the system between its On and Off states, giving all or no power to the motor, but nothing in between. "Bang-bang" control takes advantage of the fact that a motor generally will not immediately change its speed significantly. The average power to the motor is controlled by the ratio of the On time to the Off time, i.e., the duty cycle. Although effective for maintaining an average motor speed, this technique is not energy efficient. Due to the relatively low frequency of the On/Off switching, the motor sees full current during the On times, and hence full power loss for the varying duty cycles. Surplus energy applied to the motor is wasted away as heat in the motor coils. Energy efficiency is essentially the same as that provided by a linear control system.

While "bang-bang"-type On-Off control avoids the processing time required to perform more precise motor control such as PID, its severe jitter and relatively low energy efficiency limit its usability in applications where motor operation amounts must be controlled within a relatively short motor interval or burst, such as a motor drive for a sheet material dispenser.

### SUMMARY OF THE INVENTION

In view of the foregoing, it is a primary object of the present invention to provide a simple and reliable, quick-response, feedback motor control system and method.

It is a more specific object of the present invention to provide a motor control system that can provide, at once, reduced jitter and greater energy efficiency as compared to "bang-bang" motor control, and reduced signal processing requirements as compared to more complex motor control schemes, such as PID.

It is a still more specific object of the invention to provide a motor control scheme capable of closely controlling a motor operation amount within a brief cycle or burst of motor operation.

It is another object of the invention to provide a motor control system as aforesaid, which can, through use of the motor's back electromotive force (BEMF) as a feedback signal, avoid the use of separate speed detecting transducers ("pick-off" devices).

It is yet another object of the invention to provide a motor control system that can provide close control of a motor operation amount utilizing a high ripple BEMF feedback signal, while avoiding the need for substantial pre-processing or conditioning of the signal.

One or more of these, and other, objects are achieved by the various aspects of the present invention. In a first aspect, the invention is embodied in a motor drive unit for providing controlled motor operation amounts. The drive unit includes an electric motor and a controller for controlling an operation amount of the electric motor. The controller includes motor drive means for selectively supplying electrical power to the motor. BEMF detection means are provided for detecting whether a BEMF signal of the motor is above or below a threshold voltage. Power level control means are provided for cyclically adjusting the amount of power to be applied to the motor within a range of power levels, including plural non-zero power levels. For a given control cycle in which the applied power is below a maximum power level and the BEMF detection means detects a BEMF signal of the motor below the threshold voltage, the power level control means increments the applied power to a higher power level. For a given control cycle in which the applied power is above a minimum power level and the BEMF detection means detects a BEMF signal of the motor above the threshold voltage, said power level control means decrements the applied power to a lower power level.

In a second aspect, the invention is embodied in a method for controlling an operation amount of an electric motor. Electrical power is selectively supplied to the motor. It is detected whether a BEMF signal of the motor is above or below a threshold voltage. The amount of power to be applied to the motor is cyclically adjusted within a range of power levels including plural non-zero power levels. For a given control cycle in which the applied power is below a maximum power level and a BEMF signal of the motor below the threshold voltage is detected, the applied power is incremented to a higher power level. For a given control cycle in which the applied power is above a minimum power level and a BEMF signal of the motor above the threshold voltage is detected, the applied power is decremented to a lower power level.

The above and other objects, features and advantages of the present invention will be readily apparent and fully understood from the following detailed description of preferred embodiments, taken in connection with the appended drawings.

### BRIEF DESCRIPTION OF THE DRAWINGS

Figure 1 is a theoretical graphical depiction of motor speed control carried out in accordance with the present invention, plotting BEMF voltage and PWM power levels against time, within a motor operation cycle.

Figure 2 is an electrical schematic illustrating a control system in accordance with the present invention, for controlling a motor drive of a sheet material dispenser.

Figures 3A and B together form a flowchart for a motor control algorithm in accordance with the present invention.

### DETAILED DESCRIPTION OF THE PREFERRED EMBODIMENTS

As indicated in the Background section, two primary limitations of "bang-bang" motor control are jitter (which increases with higher voltage and lower speed) and relatively low energy efficiency. Both of these limitations are addressed by the present invention which, in a sense, marries bang-bang control with an adjustable output motor drive, e.g., a pulse width modulation (PWM) drive. Although a preferred embodiment of the present invention employs a PWM motor drive, other adjustable output motor drive systems may be utilized, e.g., analog or digital drives providing a continuous (rather than pulsed) variable voltage.

PWM is a technique which controls the amount of power to a load by rapidly switching it on and off, and varying the ratio of the on time to the off time (the duty cycle). The duty cycle varies the power level, and the switching occurs so rapidly that the load in effect sees a constant amount of power. Insofar as it involves On/Off switching, PWM is generally similar to "bang-bang" control. However, because the switching in PWM is carried out at a much higher frequency, electrical energy is allowed to be stored in the motor through its inductance. In contrast, "bang-bang" control only stores mechanical energy in a motor through its mass. PWM is very energy efficient because the inductance of the motor suppresses the high inrush currents that would otherwise flow when power is applied, thereby eliminating the associated energy losses.

In an exemplary control technique according to the present invention, motor speed is sensed by turning the motor off and waiting for the resulting inductive kick to die out. Then, a voltage threshold detector looks at the voltage on the motor, the BEMF, and detects whether or not it is above a threshold voltage serving as a speed setting. A PWM motor drive system is set up to have a preset number of power levels, e.g., nine (1-9), of varying (preferably proportionally increasing) duty cycle. The motor speed is repeatedly checked, e.g., at a rate of 100 times/second, and if the speed sensing voltage is above (or equal to) the threshold, the PWM is brought down to the next lower power level. If the speed sensing voltage is below the threshold, the PWM is brought up to the next higher power level. With the present inventive system, control "bangs" up and down between adjacent power levels, instead of simply between On and Off motor states. As a result, motor operation is far smoother than "bang-bang" motor control, and energy efficiency is greatly improved.

The number of power levels used in the PWM control is a trade-off between power consumption, jitter, and response time. Increasing the number of power levels will result in smoother operation (less jitter) and less power consumption, but slower system responsiveness.

The present inventive system works best with (but is not limited to) low voltage motors (e.g., operating voltage in the range of 6-9V). This is because the higher the motor operating voltage, the higher the BEMF. This means higher inductance and more time required for the inductive kick to die when the motor is turned off, which results in lost headroom (power reserve). In an exemplary embodiment as described herein, the motor is turned off about seven percent of the time (for speed checking), which means seven percent less headroom is available with which to maintain motor speed at varying battery voltages and loads.

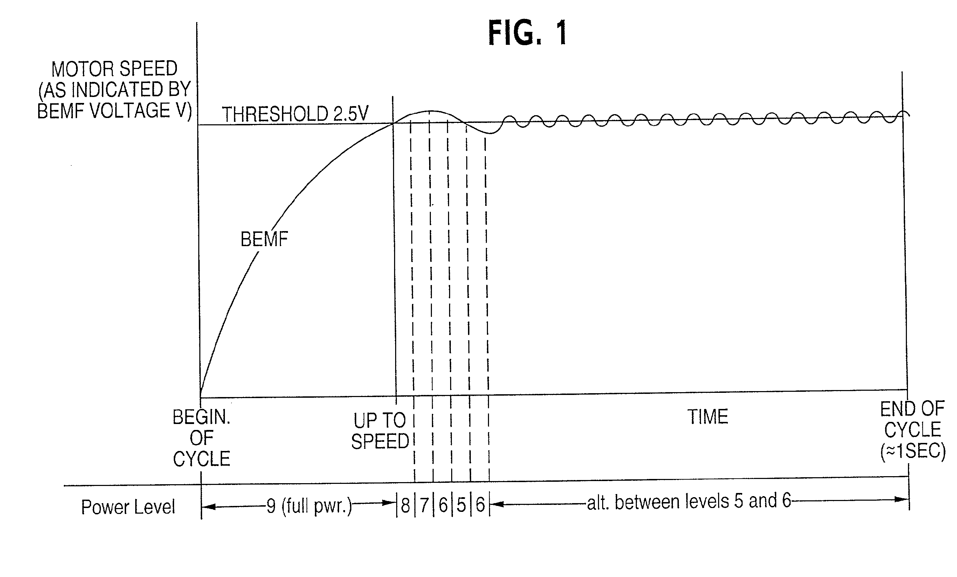

The theoretical motor speed (voltage) vs. time and power level vs. time plots of Fig. 1 provide an exemplary illustration of the present inventive motor control applied in a motor drive unit used to drive a feed roller of a sheet material dispenser. The control is carried out over a motor operation (dispense) cycle of approximately one second. It can be seen that upon initiation of the motor operation cycle, full power (level 9) is applied and the BEMF of the motor rises, generally following an exponential curve of decreasing slope, toward an asymptotic value which is above the threshold voltage. (Ripple in the BEMF signal, which may be as high as 30%, is omitted for clarity of illustration.)

Upon reaching and exceeding the threshold voltage, the power level is successively dropped, in the succeeding control cycles, to level 8, level 7, level 6, and then level 5. As the power level is dropped, the BEMF peaks and then starts to decrease. Upon reaching level 5, the BEMF drops below the threshold voltage. In the next control cycle, responsive to the detected BEMF being below the threshold voltage, power is increased back to level 6. The PWM control bounces between levels 5 and 6 through the end of the one second motor operation cycle, thus achieving an effective power level of 5.5, or 55% of full power, for a given (hypothetical) battery level and motor load. As the load is decreased (such as occurs as paper towels are dispensed from a roll), the system will tend to settle into oscillation between a lesser pair of adjacent power levels. Conversely, the system will tend to settle into oscillation between a pair of higher adjacent power levels as the load on the motor is increased, or as the battery supply voltage decreases.

Although the present invention may be implemented by way of discrete circuit components, significant benefits are achieved by implementing the control system with a control microprocessor (µP) and stored program logic (e.g., software or firmware), or with an application specific integrated circuit (ASIC). Besides its lower cost as compared to discrete circuit components, program logic can be readily configured to allow the motor operation (dispense) cycle time to be automatically adjusted to compensate for potential sources of error that may lead to inaccurate motor operation (dispense) amounts, as described below.

The present inventive system preferably provides "spin-up" compensation which compensates for the delay of the motor in initially reaching its target speed, e.g., due to the mass of the motor and its load. For example, in a motor drive unit for a sheet material dispenser, compensation for large and small towel rolls may be provided by advancing a dispense cycle counter at half a normal rate while the motor is coming up to speed. The error corrected by this technique becomes especially significant when a full towel roll is loaded into the dispenser for rotation by the motor, and at low battery voltages.

Another source of potential error arises from the limited range of power that can be provided with any motor/controller. For example, in an exemplary embodiment, a PWM controller provides maximum (full) power at level 9, and minimum (zero) power at level 0. Power level 8 is the highest level where the PWM is producing a pulsed signal, since at power level 9 full continuous power is applied to the motor (except during speed sampling). At power level 9, however, the control system may bounce down to power level 8 and then attempt to bounce above power level 9 to a power level that does not exist. Such bouncing is especially likely with a relatively inexpensive motor generating a high ripple BEMF signal.

Left uncorrected, attempts to reach a non-existent higher power level will cause lost motor speed and upset the integrity of the averaging effect of the motor, requiring succeeding samples to try to compensate. The system's inability to provide additional power, when the BEMF signal indicates a need for greater power in order to reach the threshold speed, could result in a noticeably shortened motor operation (dispense) amount. As part of the inventive control, PWM dropout compensation in effect creates an artificial power level 10, by extending the paper dispensing time to compensate for the power shortfall. Also, the time period between motor speed sampling may be extended. This allows the motor to run longer and to thereby recover lost energy before the next sample is taken. In this manner, the present inventive control serves to retain the averaging effect of the motor and to shorten system recovery time.

The inventive PWM dropout compensation may also be applied at the other end of the control range, i.e., to power level 0 (no power). In this case, conversely to the above-described compensation, motor operation time may be reduced to compensate for excess motor dynamics, and motor power may be turned off for a proportionately longer time, in order to create an artificial power level -1. This can likewise serve to maintain the integrity of the averaging effect of the motor, and shorten system recovery time.

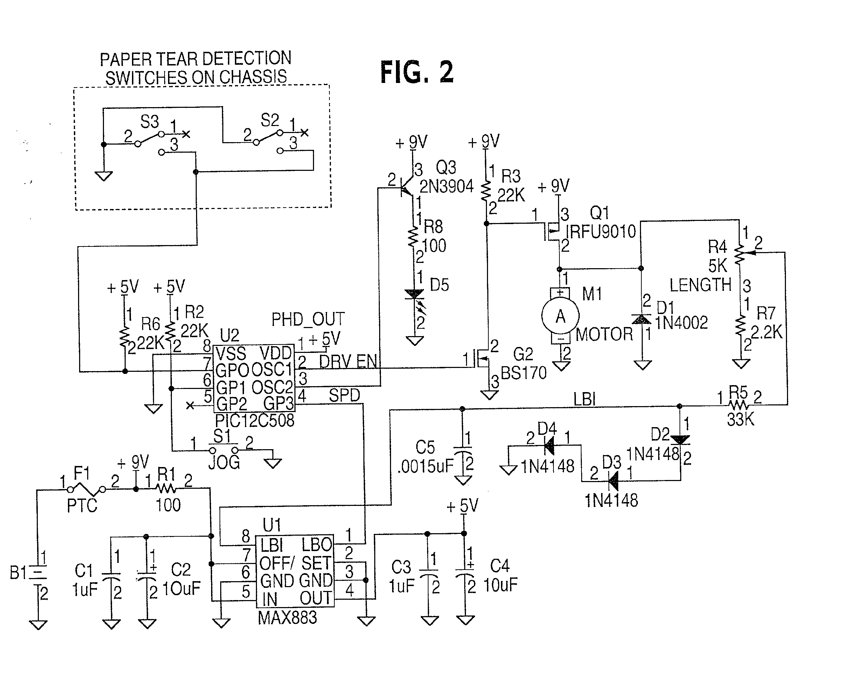

In the present exemplary application of the invention to a motor drive unit for a sheet material dispenser, motor operation and control may be initiated by a user pulling off a sheet material segment, e.g., a paper towel. A serrated tear-off knife may be mounted for slight pivotal movement and fitted with two micro-switches positioned to sense the slight movement of the knife when the user tears off a towel. With reference to Fig. 2, two switches S2 and S3 may be employed to ensure proper operation whether the user tears off the towel from the left or from the right. One switch could be used, depending on the knife holder design. Alternatively, capacitive, IR or other known types of proximity sensing could be used to initiate a dispense cycle.

In a preferred embodiment, actuation of one of the microswitches by a user tearing off a towel starts a timer (e.g., 0.6 sec.), which is held reset until the pressure on the knife is relieved. This prevents the system from starting a motor operation cycle, and thus attempting to dispense a new length of towel, while the user is still pulling on it.

Once the motor operation (dispense) cycle has begun, the aforementioned spin-up compensation routine is preferably carried out, during which motor speed is preferably sampled at a rate of 100 times per second, while decrementing a motor operation (dispense) cycle counter at half that rate. The increase in dispense time caused by the reduced count per cycle compensates for the fact that while coming up to speed, the average motor speed is approximately half the target speed. This causes the paper length to be adjusted accordingly. Spin-up compensation is limited to a preset number of cycles (e.g., 50 cycles), to reduce the maximum amount of paper length dispensed in the event the motor never quite gets up to speed. A speed sample is taken by turning off the motor, waiting for the resulting inductive kick to die down, and then checking the voltage threshold detector. The program exits the spin-up routine when a speed sample is taken which is above the threshold, or if that does not occur, upon expiration of the preset timeout (e.g., 50 cycles), in which case a stop routine is carried out.

Upon receipt of a speed (voltage) sample above the threshold, the program then branches to a PWM adjustment routine, where the duty cycle of the drive signal applied to the motor is stepped up or down, preferably one level per cycle, based on whether the motor speed is above or below the threshold. Full power is preferably applied to the motor at spin-up and the PWM control is preferably initialized at full power (e.g., level 9) to provide a smooth transition from spin-up. Upon entering the PWM adjustment routine, the control program lowers the power one level, since the speed will be above the threshold immediately after spin-up. Whenever the PWM control bumps the power level up or down, the rate of decrementing the dispense counter is preferably adjusted (upwardly or downwardly) by a compensating amount. In this manner, if the dispensing cycle finishes before a large change in speed can be averaged out, the speed change will already be compensated for, thus resulting in better control of the motor operation (dispensing) amount.

In a preferred embodiment, the PWM drive turns the motor on and off at a rate of about 3KHz, adjusting the duty cycle according to the power level count (1-9). The power level is stepped up and down as necessary to maintain the motor at the set speed. During the PWM adjustment routine, the PWM dropout compensation functions as has been described. The PWM power level is monitored, and if it goes to level 9 or above for more than half of the dispense cycle time, a BAT/JAM LED is caused to blink, indicating a fault. Generally, this means that the battery is nearing the end of its life. In addition, a jam or poor paper movement will cause the indication. The indication may be reset anytime the motor runs without fault.

After the dispense cycle counter (which may, e.g., be initially set at 3600 counts) is decremented to zero, the system may enter a sleep mode. In the sleep mode, power usage may go to near nil (except if the BAT/JAM LED is blinking), and the system waits for the next sheet segment to be torn off, which will wake the system and initiate another dispense cycle.

An exemplary circuit for carrying out the present inventive control is illustrated in Fig. 2. The inventive control may be carried out with a control microprocessor (µP) or microcontroller (µC) and stored program code (e.g., software or firmware), or an application specific integrated circuit (ASIC). As shown, a suitable µC U2 is the PIC12C508 µC, available from Microchip Technology, Inc. of Chandler, Arizona, with an internal 4MHz master oscillator. A couple transistors Q2, Q3 drive a motor M1, which may, e.g., be a small D.C. motor available as part No. RC-280SA-20120 (drawing S-X7-3094) from Mabuchi Motor Co., Ltd., Chiba-ken, Japan. A voltage threshold sensing circuit may be formed with the low battery detector portion of a MAX883 voltage regulator IC U1, available from Maxim Integrated Products, Inc. of Sunnyvale, California. Of course, numerous other types of threshold switches and other circuit components providing the indicated functionalities can be used, according to cost and availability. For example, if a microcontroller having an on-board A/D converter is used, the threshold detector may be conveniently formed with the A/D converter and appropriate firmware. In the exemplary embodiment, the voltage threshold is set by voltage regulator U1 at 1.25 volts. The speed setting is determined by scaling down the motor voltage (BEMF during speed sampling) to the reference voltage. This may be done using a voltage divider, comprising a speed adjustment potentiometer R4 and a maximum speed-limiting resistor R7. Resistor R5, together with diodes D2, D3 and D4, limit the voltage that appears at the threshold detection input of voltage regulator U1. Without these voltage-limiting components, the full battery voltage, which appears at the motor terminals while it is on, would put a false charge on capacitor C5. This would take a relatively long period to drain off when the motor is turned off, causing speed sense error. Capacitor C5 and resistor R5 serve to filter out motor brush noise spikes, which would cause false speed-readings.

F1 is a self-resetting fuse, a PTC thermistor, which prevents circuit damage due to reversed battery polarity or a stalled or shorted motor. Resistor R1, and capacitors C1 and C2 filter motor noise spikes, which may interfere with or damage voltage regulator U1. Transistor Q3 is provided to prevent the relatively large LED current from being pulled through voltage regulator U1, which would cause excessive voltage drop across resistor R1.

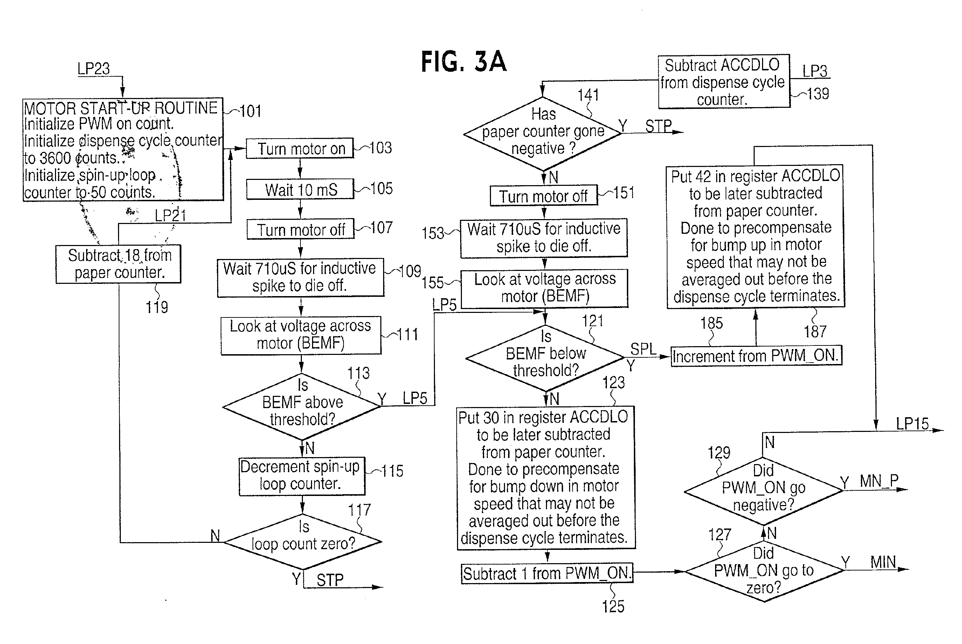

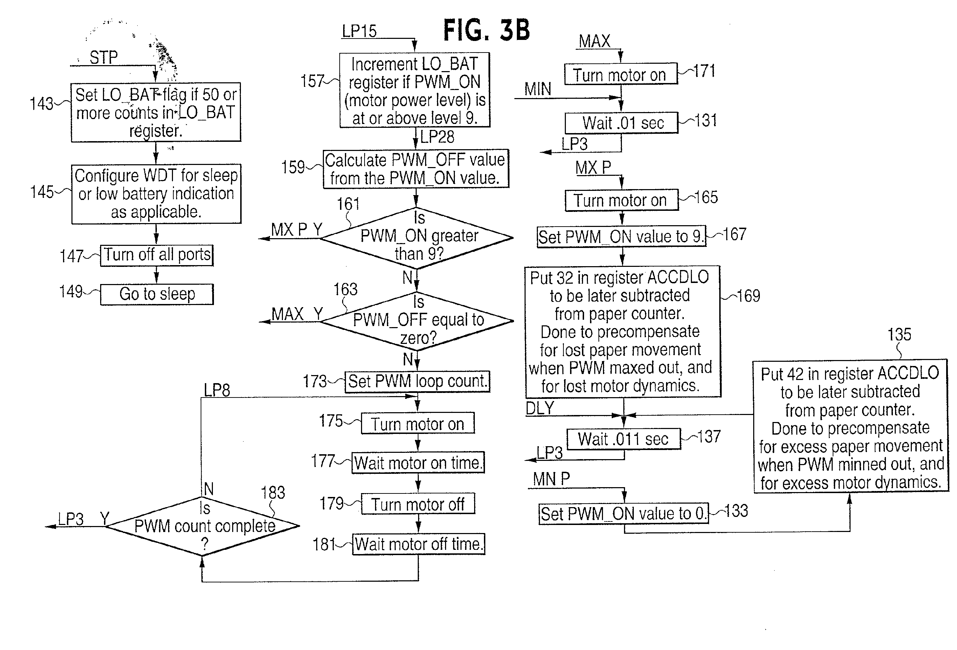

An exemplary control algorithm is now described in detail, with reference to the flow chart of Figs. 3A and B.

Control begins with a motor start-up routine 101, wherein a PWM control value PWM_ON is initialized to the highest power level (e.g., 9). Also initialized are a dispense cycle counter and a spin-up loop counter. The dispense cycle count is a count that determines the duration of a motor operation cycle - a dispense cycle in the case of a sheet material dispenser. In the illustrated exemplary embodiment, the dispense cycle counter is initially set to 3600 counts.

The spin-up loop counter is a counter that limits the maximum number of cycles of an initial spin-up routine. The spin-up routine is carried out in order to compensate for the slower average speed of the motor (approximately 50%) during the time that it takes for the motor to initially come up to speed. In the exemplary embodiment, the spin-up loop counter is initialized to 50 counts. At step 103, the motor is turned on. The motor remains on during a 10mS wait executed in step 105. Thereafter, the motor is turned off at step 107. In step 109, control pauses briefly, e.g., for 710uS, to allow the inductive spikes of the motor to die down. Thereafter, in step 111, the voltage across the motor (the BEMF) is checked. In step 113 a determination is made whether the BEMF is above or below the established threshold. Assuming that it is not above the threshold, in step 115 the spin-up loop counter is decremented (by one). In step 117, the loop count is checked to see if it has gone to zero. Assuming that it has not, control loops back to turn the motor on again, at step 119, after subtracting 18 counts from the paper counter. 18 counts represents half of the nominal 36 counts that would be subtracted per control cycle to achieve the desired dispense amount (e.g., towel length) within 100 control cycles, given a total of 3600 dispense cycles and assuming (hypothetically) that the motor speed remained precisely at the target speed throughout the dispense cycle. By decrementing the paper counter at half the nominal rate in the spin-up routine, the system increasing the motor operation duration by a corresponding amount and thereby compensates for the fact that the average motor speed over the spin-up period is approximately half as great as the target speed.

Assuming that a fault condition such as a low battery or paper jam does not exist, the BEMF detected in step 113 will go above the threshold voltage before the spin-up loop counter expires, causing control to branch to loop LP 5, where the PWM count value may be adjusted up or down (preferably only one level per control cycle) depending upon whether the detected speed (voltage) is above or below the set threshold speed (voltage). Specifically, at step 121, it is determined whether the BEMF is below the set voltage threshold. Having just exited the spin-up routine as a result of the BEMF being above the threshold, at step 113, the determination at step 121 will initially be NO, in which case control will proceed to step 123. In step 123, a count value (e.g., 30) is placed in a register ACCDLO to be later subtracted from the paper counter. This count increment is below the above-mentioned nominal count increment of 36, and thus serves to increase commensurately the motor operation (dispense) time. This is done to precompensate for a bump-down in motor speed that may not be averaged out before the dispense cycle terminates. Next, in step 125, PWM_ON is decremented, preferably by one step, to reduce the motor On time during PWM motor control. In step 127, it is determined whether PWM_ON has gone to zero (corresponding to a motor Off condition). If not, then in step 129 it is determined whether PWM_ON has gone negative (below the effective motor control range). If not, then control proceeds to loop LP 15 (see Fig. 3B).

If, in step 127, it is determined that PWM_ON has gone to zero, this indicates that speed control has gone to a minimum (zero) level based upon successive detections, in step 121, of a BEMF voltage above the set threshold voltage. To avoid this condition continuing over into the next cycle, control preferably branches to subroutine MIN (see Fig. 3B) where, in step 131, a delay of .01 sec. is introduced (with the motor still Off) before control returns to loop LP 3. If, in step 129, it is determined that PWM_ON has gone negative (i.e., below zero), this indicates that in a previous cycle PWM_ON went to zero (the minimum motor speed control state) and that even with the extended Off motor time provided by the MIN subroutine, the motor speed detected at step 121 remains above the threshold speed. In this case, control branches to subroutine MN_P (see Fig. 3B).

In subroutine MN_P, PWM_ON is initially reset to 0 in step 133. Then, in step 135, a value (e.g., 42) is placed in register ACCDLO to be later subtracted from the paper counter. This value is above the nominal 36 counts per cycle and thus results in a shortened motor operation (dispense) time serving to compensate for the excess motor dynamics. Control then loops to a delay step 137 where the motor remains Off for a set period, e.g., .011 sec. This delay serves, like step 131, to reduce motor speed so as to avoid carry over of the MIN condition to the next control cycle.

Control thereafter branches to loop LP 3 (Fig. 3A), where the value stored in register ACCDLO is subtracted from the dispense cycle counter in step 139. In following step 141, it is determined whether the paper counter has gone negative. If it has, control proceeds to a stop routine STP (see Fig. 3B) serving to terminate the motor operation interval (dispense cycle in the case of a sheet material dispenser).

In stop routine STP, a step 143 sets a low battery indication flag LO_BAT if a predetermined number of counts (e.g., 50) have accumulated in the LO_BAT register. This flag may be used to activate a fault indication (low battery) LED or the like. Next, in step 145, watchdog timer (WDT) is configured for sleep or a low battery indication, as applicable. (When a low battery condition exists, the processor is awakened more frequently than it is in the sleep mode, to allow the low battery LED to be flashed at a more rapid rate.) In step 147, all ports of the control uP are turned off, to place the control system in a sleep mode, as indicated in step 149.

If the paper counter is non-negative in step 141 (Fig. 3A), control proceeds to step 151. The motor, already Off due to the PWM_ON value of 0, remains Off in step 151. (This step turns the motor Off if it is On after branching from a different subroutine.) At step 153, a delay of 710 uS is introduced to allow for inductive spikes of the motor to die off, and the BEMF is checked in steps 155, 121 (just as in steps 113 and 115, respectively, of the spin-up routine).

Next, control proceeds through previously described loop LP 5, where an adjustment of PWM_ON is carried out based upon whether the detected BEMF is above or below the set threshold voltage.

Assuming that a NO determination is made at decision steps 121, 127 and 129 of loop LP5, control proceeds to loop LP 15 (see Fig. 3B). In step 157 of LP 15, the LO_BAT register is incremented (from an initial value of 0) if PWM_ON is at or above the highest control level 9. When control remains at or above level 9 beyond a certain number of cycles (e.g., 50), a fault condition which prevents the motor from coming up to the target speed (even at full power) is indicated, causing the low battery LED to flash. In the next step 159, a value for the OFF time of the PWM control (PWM_OFF) is calculated, as 9- (PWM_ON). Next, a check is made in step 161 to see whether PWM_ON is greater than 9. If not, in following step 163, a check is made to see whether PWM_OFF is equal to zero.

If it is determined, in step 161, that PWM_ON is greater than 9, this indicates that the motor has not been able to achieve the target speed despite the fact that full power is being applied to the motor. In this case, control branches to a subroutine MX_P. In step 165 thereof, the motor is turned On. Next, in step 167, PWM_ON is set to the maximum control value of 9. In following step 169, a value smaller than the nominal 36 counts per control cycle, e.g., 32 counts, is placed in register ACCDLO. This reduced count decrement is intended to result in a commensurately lengthened motor operation period serving to compensate for the shortfall of motor speed. Thereafter, control proceeds to step 137 which introduces a predetermined delay, e.g., .011 sec. Having just completed subroutine MX_P, the motor will be On during this delay. This is intended to increase motor speed in an attempt to avoid carry-over of the MAX condition to the next control (motor speed sampling) cycle. Control thereafter proceeds to loop LP 3 (Fig. 3A) where, in step 139, the reduced value of ACCDLO is subtracted from the dispense cycle counter. Control thereafter proceeds again through LP3 (including subroutine LP5).

If, in LP 15 (Fig. 3B), control proceeds to step 163 on the basis of PWM_ON being not greater than 9 (at step 161), and it is determined in step 163 that PWM_OFF (previously calculated as 9 - PWM_ON) is equal to zero, control branches to a MAX routine. At step 171 of the MAX routine, the motor is turned On and then control proceeds to step 131 (also forming subroutine MIN) where a predetermined wait or delay, e.g., of .01 sec. is introduced (this time with the motor On). Control thereafter returns to loop LP3.

As so far described, subroutines MN_P and MIN both have the effect of reducing the motor On time, to compensate for excessive speed of the motor. Conversely, subroutines MX_P and MAX both have the effect of increasing motor On time, to compensate for insufficient speed of the motor. The optimum count and time values used in these subroutines can be determined empirically for a particular system, i.e., by adjustment of the values and checking for variation in the actual dispense amounts from the target dispense amount. To this end, and depending on the time delay values used in the MIN and MAX subroutines, the count values utilized in the MN_P and MX_P subroutines may be set, respectively, below and above (instead of above and below) the nominal 36 counts per control cycle. In the case of the count value of subroutine MN_P being set below the nominal 36 counts per control cycle, this will have the effect of decreasing the motor Off time, which effect can be used to balance out the increased motor Off time resulting from the time delay of the MIN subroutine. Similarly, in the case of the count value of subroutine MX_P being set above the nominal 36 counts per control cycle, this will have the effect of decreasing motor On time, which effect can be used to balance out the increased motor On time resulting from the time delay of the MAX subroutine.

If it is determined in step 163 that PWM_OFF is not equal to zero, control proceeds to step 173 where a PWM loop count is set, e.g., to 29. Thereafter, the motor is turned On in step 175. At step 177, a wait corresponding to the On time of the PWM control is executed. The wait is, in terms of counts, equal to the value of PWM_ON, which will range between 1 and 9. Following the motor On time, the motor is turned Off in step 179. The motor remains off during the wait period of step 181, which, in terms of counts, is equal to PWM_OFF (calculated as 9-PWM_ON). These count values are subtracted from the preset PWM loop count as they occur. At step 183, the PWM loop count is checked to see if it has gone to zero. So long as it has not, the program loops back to turn the motor On and Off in steps 175-181, to provide a PWM drive pulse train to the motor. Once the PWM count is complete, control returns to loop LP 3 (Fig. 3A) to check motor speed and make adjustments to the PWM control values, as necessary.

The decrementing of PWM_ON at step 125 within loop LP3, upon determining at step 121 that the BEMF is not below the threshold voltage, has been described. If, on the other hand, a determination is made in step 121 that the BEMF is below the threshold voltage, then control branches to routine SPL, where PWM_ON is incremented in step 185. Thereafter, in step 187, register ACCDLO is updated with a value (e.g., 42) larger than the nominal 36 counts per cycle. As has been described, this higher value will serve to shorten the motor operation interval by reducing more quickly the paper counter (initially set at 3600), thereby precompensating for a bump up in the motor speed that may not be averaged out before the dispense cycle terminates. After step 187, control proceeds to previously described loop LP 15 (including PWM drive subroutine LP8 -- Fig. 3B).

As has been described, the numbers placed in register ACCDLO, serving to establish the rate at which the dispense counter is decremented, are set to pre-compensate for the effect that bumping the power level up or down will have on the motor operation (dispense) amount. Due to ripple in the motor BEMF, motor brush noise and the laws of probability, the power level may be bumped up or down too many times. The dispense cycle could time out before a compensating adjustment can be made. Ripple and brush noise in the motor BEMF cause large, abrupt changes in the motor speed. These large speed jerks are usually averaged out by the end of the dispensing cycle. However, sometimes large speed jerks will occur near the end of the dispensing cycle such that there is no time for the error to be averaged out. The effect will get much worse as the motor wears and the brushes get noisier, and will result in significant motor operation (dispense amount) variation if not compensated for. In a sheet material dispenser, this will result in an undesirable variation in the length of a dispensed sheet (e.g., paper towel).

Taking the above into account, every time the PWM power level is bumped up or down, the paper dispense timer is bumped up or down by an approximately compensating amount, so that if the dispense cycle times out before a large speed compensation is made, a paper length correction will have been made in advance, reducing the resulting error in the dispense amount. The effect that bumping a power level will have on the towel length varies according to the set speed and battery voltage. The numbers may be selected as median values by the following formula:
Total counts of dispense timer: 3600.
Number of counter cycles for towel length: 100.
Nominal number of counts per cycle: 3600/100 = 36.

Because of the BEMF of the motor, the amount of speed adjustment is not proportional to the power supply divided by the number of power levels. This is because the PWM power levels adjust the average voltage across the motor, which is bucked by the motor BEMF. This reduces the speed adjustment range. Therefore, bumping the PWM level up or down one level would have more effect on motor speed than if there were no BEMF. A correction factor to accommodate may be calculated as shown below.
Number of power levels: 9
Nominal 36 counts per cycle/9 power levels = 4 = the towel length count adjustment, ignoring motor BEMF
Median battery voltage: 7.5v (9v max, 6v min)
Speed adjustment range if there were no BEMF = 7.5v - 0v = 7.5v
Motor BEMF at nominal towel length (speed): 2.5v
Real speed adjustment range = 7.5v - 2.5v = 5.0v
7.5v / 5.0v = 1.5 = towel length correction factor, taking into account motor speed.
1.5 * 4 = 6 = Towel length count adjustment, corrected for motor BEMF at nominal speed and battery voltage.

Bumping up or down the motor speed has an effect of 6 counts on the towel length only at one set speed (2.5 v BEMF) and battery voltage (7.5v). This is a median value only. The accuracy of this compensation can be significantly improved by constantly monitoring the battery voltage and current BEMF level, and changing the counts accordingly, if warranted for a particular application.

The present invention has been described in terms of preferred and exemplary embodiments thereof. Numerous other embodiments, modifications and variations within the scope and spirit of the appended claims will occur to persons of ordinary skill in the art from a review of this disclosure. In the claims, the use of the labels for algorithm variables appearing in the specification is for convenience and clarity and is not intended to have any limiting effect.

## Claims

1. A motor drive unit for providing controlled motor operation amounts, comprising:
an electric motor; and
a controller for controlling an operation amount of said electric motor, said controller comprising:
motor drive means for selectively supplying electrical power to said motor;
BEMF detection means for detecting whether a BEMF signal of said motor is above or below a threshold voltage; and
power level control means for cyclically adjusting the amount of power to be applied to said motor within a range of power levels including plural non-zero power levels, wherein:
for a given control cycle in which the applied power is below a maximum power level and said BEMF detection means detects a BEMF signal of the motor below said threshold voltage, said power level control means increments the applied power to a higher power level; and
for a given control cycle in which the applied power is above a minimum power level and said BEMF detection means detects a BEMF signal of the motor above said threshold voltage, said power level control means decrements the applied power to a lower power level.

2. A motor drive unit according to claim 1, wherein said motor drive means supplies a pulse width modulated (PWM) signal to said motor and said power level control means controls a duty cycle of said PWM signal.

3. A motor drive unit according to claim 1, further comprising motor operation cycle adjustment means for adjusting a motor operation cycle time based upon control carried out by said power level control means.

4. A motor drive unit according to claim 3, wherein said motor operation cycle adjustment means decreases a motor operation cycle time upon said power level control means incrementing the applied power to a higher level, and increases a motor operation cycle time upon said power level control means decrementing the applied power to a lower level.

5. A motor drive unit according to claim 3, wherein for a given control cycle in which the applied power is at a maximum power level and said BEMF detection means detects a BEMF signal of the motor below said threshold voltage, said power level control means maintains the applied power at said maximum power level and said operation cycle adjustment means increases the motor operation cycle time.

6. A motor drive unit according to claim 3, wherein for a given control cycle in which the applied power is at a minimum power level and said BEMF detection means detects a BEMF signal of the motor above said threshold voltage, said power level control means maintains the applied power at said minimum power level and said operation cycle adjustment means decreases the motor operation cycle time.

7. A motor drive unit according to claim 3, wherein said operation cycle adjustment means increases the motor operation cycle time in relation to the time required for the motor BEMF to initially reach the threshold voltage.

8. A method for controlling an operation amount of an electric motor, comprising:
selectively supplying electrical power to said motor;
detecting whether a BEMF signal of said motor is above or below a threshold voltage; and
cyclically adjusting the amount of power to be applied to said motor within a range of power levels including plural non-zero power levels, wherein:
for a given control cycle in which the applied power is below a maximum power level and a BEMF signal of the motor below said threshold voltage is detected, the applied power is incremented to a higher power level; and
for a given control cycle in which the applied power is above a minimum power level and a BEMF signal of the motor above said threshold voltage is detected, the applied power is decremented to a lower power level.

9. A method according to claim 8, wherein the electrical power selectively supplied to said motor is supplied as a pulse width modulated (PWM) signal, and a duty cycle of said PWM signal is controlled to adjust the amount of power to be applied to said motor.

10. A method according to claim 8, further comprising adjusting a motor operation cycle time based upon the cyclical adjustment of the amount of power applied to the motor.

11. A method according to claim 10, wherein a motor operation cycle time is decreased upon the power applied to the motor being incremented to a higher level, and a motor operation cycle time increased upon the power applied to the motor being decremented to a lower level.

12. A method according to claim 12, wherein for a given control cycle in which the power applied to the motor is at a maximum power level and a BEMF signal of the motor below said threshold voltage is detected, the power applied to the motor is maintained at said maximum power level and the motor operation cycle time is increased.

13. A method according to claim 10, wherein for a given control cycle in which the power is applied to the motor is at a minimum power level and a BEMF signal of the motor above said threshold voltage is detected, the power applied to the motor is maintained at said minimum power level and the motor operation cycle time is decreased.

14. A method according to claim 10, wherein the motor operation cycle time is increased in relation to the time required for the motor BEMF to initially reach the threshold voltage.
